# FASCICULE DE BREVET EUROPEEN

(11) **EP 0 594 473 B1**
(45) Date de publication et mention de la délivrance du brevet: **12.04.1995**
(21) Numéro de dépôt: 93402376.3
(22) Date de dépôt: 29.09.1993
(51) Int. Cl.: G06F 11/00

(54) **Micro-calculateur pouvant fonctionner en mode d'émulation avec des périphériques internes et externes**
Mikrokontroller verfügend über einen Emulationsmodus mit internen und externen Peripherie
Microcontroller having an emulation mode with internal and external peripherals

(30) Priorité: 02.10.1992 FR 9211716
(43) Date de publication de la demande: 27.04.1994
(73) Titulaire: SGS-THOMSON MICROELECTRONICS S.A., 94250 Gentilly (FR)
(72) Inventeur: Basset, Philippe, Cabinet BALLOT-SCHMIT, F-75116 Paris (FR); Tarayre, Pierre, Cabinet BALLOT-SCHMIT, F-75116 Paris (FR)
(74) Mandataire: Schmit, Christian Norbert Marie

(56) Documents cités:
- US-A- 4 514 805
- EDN ELECTRICAL DESIGN NEWS., vol.34, no.6, 16 Mars 1989, NEWTON, MASSACHUSETTS US pages 131 - 144 ERIC P HORTON 'Construct a low-cost 8096-family development system'
- EDN ELECTRICAL DESIGN NEWS., vol.31, no.23, 13 Novembre 1986, NEWTON, MASSACHUSETTS US pages 193 - 207 ERIC P HORTON 'Make yout own low-cost 8051 emulator'

## Description

La présente invention concerne un micro-calculateur pouvant fonctionner en mode d'émulation avec des périphériques externes et internes.

On sait qu'un micro-calculateur comprend généralement un processeur central dit CPU ("Central Processing Unit"), au moins un périphérique interne (horloge, convertisseur analogique numérique, etc.), un décodeur d'adresse interne et une mémoire interne (ROM, RAM, EEPROM, EPROM,...), reliés par un bus de données et d'adresses. Le processeur central comporte des ports et un bus de connexion vers l'extérieur en mode utilisateur.

Il est souvent nécessaire d'émuler des circuits qui n'existent pas encore. Pour ce faire, il serait souhaitable d'utiliser des micro-calculateurs qui existent déjà. Toutefois, si un périphérique du micro-calculateur n'est pas fonctionnel ou n'existe pas, il est alors impossible de recréer sa fonction à l'intérieur du micro-calculateur. On ne peut alors obtenir un émulateur. Un émulateur selon l'état de la technique est connu de EDN Electrical Design News, Vol. 31, n°23, 13 Novembre 1986 Newton, Massachusetts, U.S, Eric P. HORTON, "Make your own low-cost 8051 emulator", p. 193-207.

La présente invention a pour but d'obvier à cet inconvénient, au moyen d'un micro-calculateur possédant des périphériques internes et des périphériques externes accessibles de façon sélective. Ainsi, si un périphérique interne ne correspond pas à la demande, il est possible de recréer sa fonction à l'extérieur du micro-calculateur. En outre, il devient possible d'utiliser un micro-calculateur pour émuler plusieurs micro-calculateurs différents.

Selon l'invention, en mode émulation, les ports du micro-calculateur sont connectés à des périphériques externes et à un décodeur d'adresse externe. Le décodeur d'adresse externe émet un signal appliqué au processeur central pour bloquer la pré-charge du décodeur d'adresse interne lorsqu'un périphérique externe est sélectionné.

De préférence, des mémoires externes sont également connectées aux ports d'entrée/sortie, un périphérique externe n'ayant accès qu'à une mémoire externe.

Avantageusement, lorsque le processeur central comporte au moins une entrée d'interruption utilisable par un périphérique, les signaux de demande d'interruption provenant des périphériques internes et externes sont respectivement appliqués en mode d'émulation aux entrées d'une porte OU dont la sortie est reliée à l'entrée d'interruption du processeur central.

Le signal d'interruption provenant du périphérique externe est d'abord appliqué à une entrée d'une porte ET à l'autre entrée de laquelle est appliqué un signal correspondant au mode de fonctionnement du micro-calculateur.

La présente invention sera mieux comprise et d'autres avantages, caractéristiques, et possibilités apparaîtront plus clairement à la lecture de la description qui suit d'un mode de réalisation donné à titre non limitatif, à laquelle est jointe une planche de dessins sur laquelle:
- la figure 1 représente schématiquement un micro-calculateur agencé selon l'invention;
- la figure 2 est un diagramme des temps de quelques signaux dans le micro-calculateur de la figure 1; et
- la figure 3 illustre schématiquement le circuit logique d'une entrée d'interruption du processeur central.

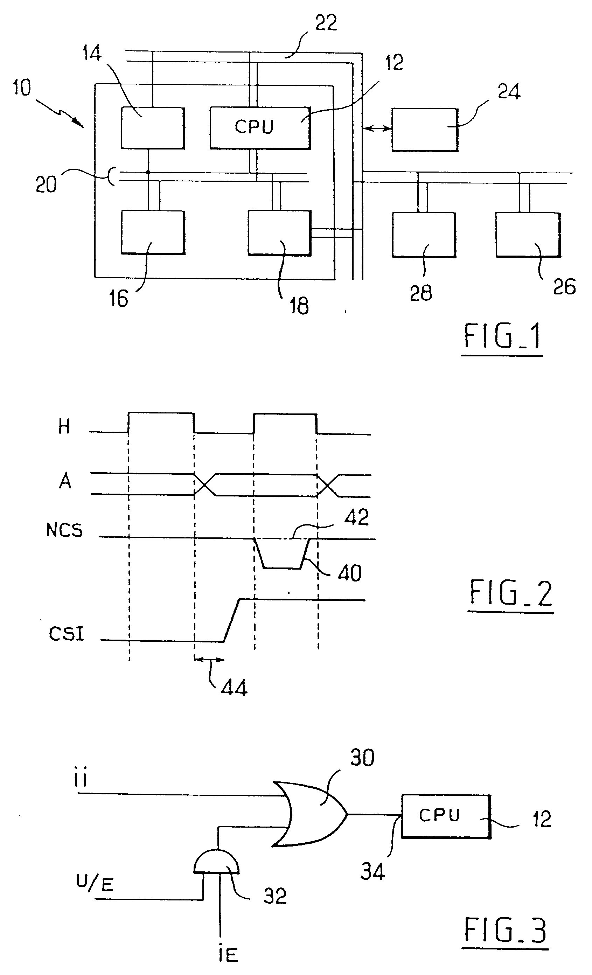

En référence maintenant à la figure 1, un micro-calculateur 10 comprend un processeur central 12, des périphériques 16, des mémoires 18 et un décodeur d'adresse interne 14, ces divers composants étant connectés à un bus de données et d'adresses 20. Le processeur central 12 comporte des ports d'entrée/sortie 22 vers l'extérieur en mode utilisateur.

Pour un fonctionnement en mode utilisateur avec des périphériques extérieurs, les périphériques extérieurs 28 et des mémoires extérieures 26 sont connectés aux ports d'entrée/sortie du processeur central 12. Ainsi, en mode d'émulation, les ports d'entrée/sortie vers l'extérieur du calculateur central 12 sont utilisés en bus de données, et en bus d'adresses et de contrôle.

Conformément à l'invention, aux ports d'entrée/sortie vers l'extérieur du processeur central 12 est connecté un décodeur d'adresse externe 24. Ce décodeur renvoie un signal indiquant si l'adresse d'un périphérique est une adresse interne ou externe.

De façon conventionnelle, les échanges d'informations entre les périphériques 16 et le processeur central 12 se font au moyen de signaux comportant, comme représentés figure 2 succinctement, un signal d'horloge H de type à créneaux carrés, seize signaux d'adresses A positionnés sur les fronts descendants du signal d'horloge, huit signaux de données, non représentés figure 2, dont les valeurs changent lors des fronts montants du signal d'horloge, un signal également non représenté indiquant s'il s'agit d'une écriture ou d'une lecture, un signal de sélection du périphérique généré par le décodeur d'adresse, et enfin un signal d'interruption du processeur central.

Le signal de sélection du périphérique représenté sous les initiales NCS figure 2 est normalement actif à l'état bas. Lorsque le signal d'horloge est à l'état bas, il y a pré-charge du décodeur d'adresse. Lorsque le signal d'horloge passe à l'état haut, il y a activation des signaux de sélection et le signal de sélection passe à l'état bas (40, figure 2).

En mode utilisateur habituel, l'adressage d'un périphérique par le processeur central 12 se fait en un cycle d'horloge H comme suit: lorsque le signal d'horloge est à l'état bas, il y a positionnement des adresses par le processeur central 12, positionnement du signal écriture/lecture, et pré-charge du décodeur d'adresse. Lorsque le signal d'horloge passe à l'état haut, la pré-charge du décodeur d'adresse cesse et il y a activation du signal de sélection du périphérique sélectionné, puis les données sont forcées sur le bus de données par le processeur central 12 lors d'un cycle d'écriture ou par le périphérique choisi lorsqu'il y a un cycle de lecture. Bien évidemment, une demande d'interruption au processeur central peut être faite à tout moment par un périphérique.

Comme indiqué précédemment, selon l'invention, un décodeur d'adresse externe 24 est connecté aux ports d'entrée/sortie 22, ainsi que des périphériques 28 et des mémoires 26. Le décodeur d'adresse externe 24 émet un signal (CSI, figure 2) changeant d'état en fonction de l'adresse indiquée, à savoir restant à l'état bas tant que l'adresse indiquée est une adresse interne et passant à l'état haut lorsque l'adresse indiquée est une adresse externe au micro-calculateur 10. Ce signal est réintroduit dans le processeur central 12.

Ainsi, en mode d'émulation, l'adressage permet de choisir une adresse interne ou externe. L'adressage des périphériques par le processeur central 12 se fait également en un cycle d'horloge H. Lorsque l'horloge est à l'état bas, il y a positionnement des adresses par le processeur central 12, positionnement du signal lecture/écriture, pré-charge du décodeur d'adresse interne mais il y a en plus le décodage externe des adresses par le décodeur 24 et émission du signal CSI résultant du décodage externe. Lorsque le signal d'horloge H passe à l'état haut, il y a alors deux possibilités en fonction de l'état du signal CSI. Si le signal CSI est à l'état bas, cela signifie que c'est un périphérique interne 16 qui a été sélectionné, et le micro-calculateur 10 agit comme d'habitude. Si le signal CSI est à l'état haut, alors le signal NCS de pré-charge du décodeur d'adresse interne reste bloqué à l'état haut comme indiqué par des tirets 42 figure 2 et il y a alors forçage des données sur les ports d'entrée/sortie 22 fonctionnant alors en bus de données soit par le processeur central 12 sur un cycle d'écriture, soit par le périphérique extérieur 28 sur un cycle de lecture.

On constate donc qu'un tel micro-calculateur peut fonctionner en mode d'émulation aussi bien avec des périphériques internes qu'avec des périphériques externes.

Comme on l'a vu le signal CSI engendré par le décodeur d'adresse externe 24 ne change d'état que pendant que le signal d'horloge H est à l'état bas. Ainsi, il y a un décalage temporel 44 figure 2 entre le front descendant du signal d'horloge et le front montant du signal CSI émis par le décodeur d'adresse 24. Ce décalage 44 est inférieur au demi-cycle d'horloge et de ce fait il n'empêche pas le blocage du signal de pré-charge du décodeur d'adresse interne requis.

Comme précédemment indiqué, une demande d'interruption au processeur central 12 doit pouvoir être faite à tout moment par un périphérique tant externe qu'interne. Cinq entrées d'interruption sont dédiées aux périphériques externes. Figure 3, on a représenté une des entrées d'interruption du processeur central 12. Cette entrée d'interruption 34 est reliée à la sortie d'une porte OU 30 aux deux entrées desquelles sont appliqués les signaux de demande d'interruption. L'une de ces deux entrées de la porte OU 30 reçoit directement le signal de demande d'interruption interne Il et l'autre entrée reçoit un signal de demande d'interruption d'un périphérique externe IE par l'intermédiaire d'une porte ET permettant de valider la demande si le micro-calculateur fonctionne en mode d'émulation. Ainsi, un signal correspondant au mode utilisé U/E, c'est-à-dire au mode utilisateur ou mode émulation, est appliqué à l'autre porte d'entrée de la porte ET 32.

Bien que seul un mode préféré de réalisation de l'invention ait été décrit, il est bien évident que des modifications peuvent être apportées sans sortir du cadre de l'invention tel que défini ici.

## Revendications

1. Micro-calculateur pouvant fonctionner en mode d'émulation avec des périphériques extérieurs, comprenant un processeur central (12), au moins un périphérique interne (16), un décodeur d'adresse interne (14) et une mémoire interne (18) reliés par un bus de données et d'adresses (20), le processeur central (12) comportant des ports d'entrée/sortie vers l'extérieur (22) en mode utilisateur, caractérisé en ce qu'en mode d'émulation, lesdits ports d'entrée/sortie (22) sont respectivement connectés auxdits périphériques externes (28) et à un décodeur d'adresse externe (24), ledit décodeur d'adresse externe (24) émettant un signal appliqué au processeur central (12) pour bloquer la pré-charge du décodeur d'adresse interne (14) lorsqu'un périphérique externe (28) est sélectionné.

2. Micro-calculateur selon la revendication 1, caractérisé en ce que des mémoires externes (26) sont également connectées auxdits ports d'entrée/sortie (22).

3. Micro-calculateur selon l'une quelconque des revendications 1 ou 2, dont ledit processeur central (12) comporte au moins une entrée d'interruption, caractérisé en ce que les signaux de demande d'interruption provenant des périphériques internes (16) et externes (28) sont respectivement appliqués aux entrées d'une porte OU (30) dont la sortie est reliée à ladite entrée d'interruption (34), le signal de demande d'interruption provenant d'un périphérique externe (28) étant d'abord appliqué à l'entrée d'une porte ET (32) à l'autre entrée de laquelle est appliqué un signal correspondant au mode de fonctionnement du micro-calculateur (10).

## Patentansprüche

1. Mikrokontroller, der mit äußerer Peripherie in einer Emulationsbetriebsart arbeiten kann, umfassend einen zentralen Prozessor (12), zumindest eine innere Peripherie (16), einen inneren Adreßdekodierer (14) und einen inneren Speicher (18), die über einen Adreß- und Datenbus (20) verbunden sind, wobei der zentrale Prozessor (12) in der Anwenderbetriebsart Eingangs-/Ausgangsports (22) nach außen hin umfaßt, dadurch gekennzeichnet, daß die Eingangs-/Ausgangsports (22) in der Emulationsbetriebsart mit der äußeren Peripherie (28) bzw. einem äußeren Adreßdekodierer (24) verbunden sind, wobei der äußere Adreßdekodierer (24) ein Signal ausgibt, welches dem zentralen Prozessor zugeführt wird, um die Vorladung des inneren Adreßdekodierers (14) zu sperren, wenn eine äußere Peripherie (28) ausgewählt ist.

2. Mikrokontroller nach Anspruch 1, dadurch gekennzeichnet, daß gleichfalls äußere Speicher (26) mit den Eingangs-/Ausgangsports verbunden sind.

3. Mikrokontroller nach einem der Ansprüche 1 oder 2, bei dem der zentrale Prozessor (12) zumindest einen Unterbrechungseingang umfaßt, dadurch gekennzeichnet, daß die von der inneren (16) und äußeren (28) Peripherie stammenden Unterbrechungs-Anforderungssignale jeweils den Eingängen eines ODER-Tors (30) zugeführt werden, dessen Ausgang mit dem genannten Unterbrechungseingang (34) verbunden ist, wobei das von einer äußeren Peripherie (28) stammende Unterbrechungs-Anforderungssignal zuvor dem Eingang eines UND-Tors (32) zugeführt wird, dessen anderem Eingang ein der Betriebsart des Mikrokontrollers (10) entsprechendes Signal zugeführt wird.

## Claims

1. Microcomputer able to function in emulation mode with external peripherals, comprising a central processor (12), at least one internal peripheral (16), an internal address decoder (14) and an internal memory (18) connected by a data and address bus (20) , the central processor (12) having input/output ports to the outside (22) in user mode, characterised in that, in emulation mode, the said input/output ports (22) are respectively connected to the said external peripherals (28) and to an external address decoder (24), the said external address decoder (24) transmitting a signal applied to the central processor (12) in order to inhibit the preloading of the internal address decoder (14) when an external peripheral (28) is selected.

2. Microcomputer according to Claim 1, characterised in that external memories (26) are also connected to the said input/output ports (22).

3. Microcomputer according to either one of Claims 1 or 2, in which the said central processor (12) has at least one interruption input, characterised in that the signals demanding interruption coming from the internal (16) and external (28) peripherals are respectively applied to the inputs of an OR gate (30), the output of which is connected to the said interruption input (34), the signal demanding interruption coming from an external peripheral (28) being first of all applied to the input of an AND gate (32), to the other input of which there is applied a signal corresponding to the operating mode of the microcomputer (10).
